# EUROPEAN PATENT APPLICATION

(11) **EP 2 610 763 A1**
(43) Date of publication of application: **03.07.2013**
(21) Application number: 12192220.7
(22) Date of filing: 12.11.2012
(51) Int. Cl.: G06F 17/30

(54) **Automated framework for post archival data comparison**

(30) Priority: 30.11.2011 IN MU33682011
(71) Applicant: Tata Consultancy Services Limited, 400021 Mumbay (IN)
(72) Inventor: Rampeesa,, Yugendar, 560066 Bangalore (IN); Madas,, Sunayana, 560066 Bangalore (IN); Lukka,, Srikanth, 560066 Bangalore (IN)
(74) Representative: Clark, David Julian

(57) **Abstract**

A system and method for automatic testing of data integrity of an archived data, wherein the said archived data is transmitted from a source database to a target database via a data comparison engine. The data comparison engine further comprising of at least one scripting module adapted to compare the corresponding source data values with target data values via at least one public function/ test script. The said system and method enables to ensure that the data is archived correctly and mapped to the right fields on target database.

## Description

### FIELD OF THE INVENTION

The present invention relates to testing of database for likely inconsistencies and to identify integrity issues with the database. More particularly, the invention relates to testing of archived data being transmitted from a source to target database for its integrity and consistency.

### BACKGROUND OF THE INVENTION

Computing environment in any growing business generally necessitates a large storage system. These storage systems are usually adapted to periodically archive data in a predetermined format, to maintain desired performance level, which is compatible with the computing environment then in place.

A live database is archived to reduce the load on live system thereby improving the overall performance. Such archived data is desired to be correct and consistent with the source data. However, with growing business needs, the computing environment including a data retrieval system may change resulting in incompatibility with the archived database, which degrades the performance of the computing environment. To detect inconsistencies with the archived data, a testing is required.

Testing an archival database is often cumbersome and challenging due to large volumes of data involved, complex data structures and complexity of business scenarios used to archive the same. Testing teams need to ensure that the data is archived correctly and mapped to the right fields on target database.

Though currently various database management systems are used, data verification of an archived data in the archived database in precisely not disclosed in the prior art.

In one of the significant database management systems of IBM, "Infosphere optim data management solution", that discloses a solution for various data management requirement. The said tool manages data from requirement to retirement. Boost performance, empower collaboration, and improve governance across application, databases and platforms. However, it does not mention about the data archiving and data verification post archival.

"Data archiving software" developed by dell labs teach about the typical desktop supporting tools for backup and recovery. However, the archiving software, doesn't disclose the post data archiving and testing for archived data.

Thus there exists a need to solve the long standing problem of testing an archived.

### OBJECTS OF THE INVENTION

The primary object of the present invention is to provide a data comparison framework to automate the test process of data verifications for archived data via using a automation tool quick test professional (HP-QTP).

Another object of the present invention is to provide a method and system for increasing the test coverage for the archived data thereby reducing the potential defects, nullifies the human errors and provides user friendly results in XL format.

Another object of the present invention is to provide a method and system for quick test professional (QTP) data comparison functions to map and compare the data for its correctness.

Another object of the present invention is to provide a test automation framework adapted to caters the testing of data housekeeping projects.

Yet another object of the present invention is to provide a data comparison engine adapted to compare the corresponding mapped values of data fields retrieved from source database and target database.

Yet another object of the present invention is to provide a scripting module adapted to compare the corresponding source data values with target data values using at least one public function / test script.

Yet another object of the present invention is to provide spreadsheet adapted to displays the report generated post mapping of the respective data values.

Other objects, features and advantages of the invention will become apparent from the following description of the embodiments of the invention taken in conjunction with the accompanying drawings.

### SUMMARY OF THE INVENTION

Before the present systems and methods, enablement are described, it is to be understood that this application is not limited to the particular systems, and methodologies described, as there can be multiple possible embodiments which are not expressly illustrated in the present disclosures. It is also to be understood that the terminology used in the description is for the purpose of describing the particular versions or embodiments only, and is not intended to limit the scope of the present application.

The principal aspect of invention is to provide a system to automate testing of data integrity of an archived data, the archived data is transmitted between a source database and a target database. The said system comprises an input module adapted to record a unique identifier, a test execution engine to generate a XML file containing user input fetched therefrom the input module, a data field mapper adapted to map corresponding source to target data field for consistency, a data comparison engine adapted to identify potential values in each mapped data field and generate an comparison status report for each compared data values, and a result generating module adapted to generate output of the scripting module in the form of a spreadsheet.

In another aspect of invention a method is provided to automate testing of data integrity of an archived data, the archived data is transmitted between a source database and a target database, via a data comparison engine, wherein the integrity of the said archived data is tested by fetching the values of corresponding data fields from the source database and the target database; mapping corresponding source and target data fields in the source and target database for consistency; comparing values occurring in the corresponding mapped source and target data fields; and generating a report of data integrity, the report comprising at least one data fields inconsistent at the mapping stage and at least one mapped field having deviating values at the comparison stage of the said method.

### BRIEF DESCRIPTION OF THE DRAWINGS

Exemplary embodiments of the invention are discussed hereinafter in reference to the following drawings, in which photographs of pertinent human have been used as the only practicable medium for illustrating details of the claimed invention, and in which:
Figure. 1 illustrates automation framework architecture for the archival data comparison using test automation according to an exemplary embodiment of the invention.
Figure.2 illustrates components for data comparison engine according to an exemplary embodiment of the invention.
Figure. 3 illustrates block diagram showing method to automate testing of data integrity of an archived data according to an exemplary embodiment of the invention.

### DETAILED DESCRIPTION OF THE INVENTION

Some embodiments, illustrating its features, will now be discussed in detail. The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise. Although any methods, and systems similar or equivalent to those described herein can be used in the practice or testing of embodiments, the preferred methods, and systems are now described. The disclosed embodiments are merely exemplary.

A system to automate testing of data integrity of an archived data, the archived data is transmitted between a source database and a target database, the system comprising: an input module adapted to record a unique identifier; a test execution engine to generate a XML file containing user input fetched therefrom the input module; a data field mapper adapted to map corresponding source to target data field for consistency; a data comparison engine adapted to identify potential values in each mapped data field and generate a comparison status report for each compared data values; and a result generating module adapted to generate output of the scripting module in the form of a spreadsheet.

The present invention is adapted to provide an automated framework to test process of data verification for archived data in to XML format. The framework will test and confirm about the data archival correctness and consistency as such that each of the data fields are archived correctly into the XML archive database with corrects values. The said framework runs on the HP quick test professional (QTP) Tool.

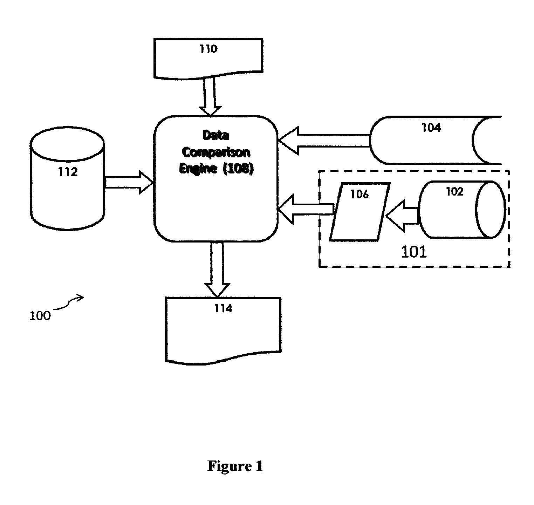

Figure.1 illustrates automation framework architecture for the archival data comparison using test automation according to an exemplary embodiment of the invention.

Referring to figure 1 illustrates a system **100** for archival data comparison framework using test automation. The said system **100** comprises an input module **101** comprising a source data base **102** and target data base (an archived XML database) **104,** an user interface (UI) **106,** a data comparison engine **108,** a trigger file module **110,** a reference database **112** and a result generating module **114.**

In a preferred embodiment of the invention, the data comparison engine **108** is a computing device within which set of instructions when executed may cause it to perform any one methodologies discussed in the specification.

The said system **100** further comprises a test execution engine (not shown in figure) and a data field mapper (not shown in figure).

In a preferred embodiment of the invention, the input module **101** adapted to record a unique identifier. The input module **101** further comprises the source database **102** and the user interface (UI) **106** wherein the source database **102** is used to retrieve the values of each of the data fields to compare with the values retrieved from the target database **104.**

In a preferred embodiment of the invention, the source database **102** is adapted to indicate the data obtained for the user via the user interface (UI) **106** which further retrieved data from the source database **102** to verify for data integrity for archived XML data.

In a preferred embodiment of the invention, target database **104** is adapted to store the archived data in to XML format.

In a preferred embodiment of the invention, the test execution engine is adapted to generate a XML file containing user input fetched therefrom the input module **101.**

In a preferred embodiment of the invention, the data field mapper is disposed on the data comparison engine **108** adapted to map corresponding source to target data field for consistency.

In a preferred embodiment of the invention, the reference database **112** comprises 2 XL spreadsheets i.e. a first sheet and a second sheet. According to exemplary embodiment of the invention the first sheet enables user needs to input the details of the build and the record number(s) (policy numbers / Case Ids / any Unique Ids/) which needs Pre and Post data archival verifications. The second sheet is provided with a onetime data set-up that contains all the possible data fields which needs to be verified for their values in the source database **102** and the target databases **104.**

In a preferred embodiment of the invention, the system **100** is further provided with empty slots to populate the results i.e. XML values, UI values and data matching indicators.

In a preferred embodiment of the invention, for each record the data comparison engine **108** adapted to fetches the values of each of the data fields from the target database **104** and subsequently it retrieves the values of each of the data fields from the source database **102,** maps those values against the correct data fields and then compares each of those values. For each successful match there will be a pass, otherwise a fail will be resulted and populates these test results in to XL file for each record.

In a preferred embodiment of the invention, the result generating module **114** adapted to provide the test results. Upon successful execution of the data comparison engine **108,** the test results will be uploaded either on to the drive specified or to the test management tool HP - quality center folders. The test results will be initially written on to the already set up one time reference database **112** which subsequently populates as results into an XL sheet.

In a preferred embodiment of the invention, the trigger file module **110** adapted to compare the data and print the data matching indicators such as 'pass', 'fail', 'not applicable'.

In a preferred embodiment of the invention, the trigger file module **110** refers to a spread sheet which is forwarded to the data comparison engine **108** to trigger the post archival data verification process.

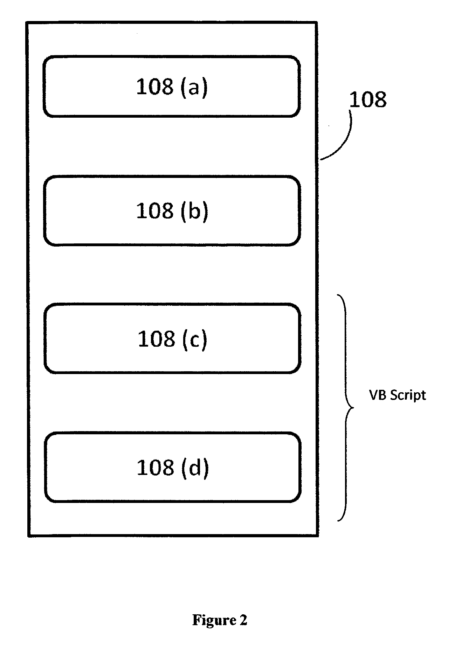

Figure.2 illustrates components for data comparison engine according to an exemplary embodiment of the invention.

Referring to figure 2 illustrates the components of the data comparison engine **108** obtaining the input from the source database **102** via the user interface (UI)**106** and the target database **104** to generate the test results in the form of a spreadsheet. The data comparison engine **108** comprises a HP quick test professional (QTP) Tool **108** (a), a QTP object repository module **108** (b), a test script **108** (c) and a public function module **108** (d).

In a preferred embodiment of the invention, the data comparison engine **108** uses HP Quick Test Professional [QTP] **108** (a) adapted for the data comparison between the data field values of the source database **102** and the target database **104.**

In a preferred embodiment of the invention, data comparison engine **108** further comprising of at least one scripting module adapted to compare the corresponding source data values with target data values via at least one public function / test script

In a preferred embodiment of the invention, the QTP object repository **108** (b) is a key utility of QTP tool, comprising a set of object types or classes that it uses to represent the objects on the UI. Each test object class has a list of properties that can uniquely identify objects of that class, and a set of relevant methods that QTP can perform during a run session. As a onetime activity all the objects of the UI (Ex: Web lists, Radio buttons) are created and stored on to the object repository with unique name and properties are attributed to each of these objects classes.

In a preferred embodiment of the invention, the test script **108** (c) is designed for using the QTP's VB scripting. The test script **108** (c) is subjected to run on the available test environments and on the records by the data comparison engine **108,** which will be triggered based on the user inputs into the reference database **112.** The test script **108** (c) generates the XML file for each of the records, triggers the functions which will enquire and retrieves the data from the UI, retrieves the data from the XML file, maps and places the data on to the appropriate work sheets which were already setup in reference database **112.** Then it will trigger the function to compare the data and print the data matching indicators such as 'pass', 'fail', 'not applicable'.

In a preferred embodiment of the invention, the data comparison engine **108** uses the test scripts **108** (c) and the public functions **108** (d) as a part of VB scripting language. The data comparison engine **108** uses the public functions **108** (d) to develop the VB script which will act as utilities to this tool, which will be 'Public' due to their reusability factor. These public functions **108** (d) will be called within the test script **108** (c) where required. Examples of public functions **108** (d) developed to retrieve the data from the XML and upload on to the spread sheet, to retrieve the data from the source database **102** and upload on to the spread sheet, to run the data comparison between the target (XML) values and source database values etc.

In a preferred embodiment of the invention, the result generated module **114** comprises the test results received upon successful execution of the data comparison engine **108,** the test results will be uploaded either on to the drive specified or to the test management tool HP - Quality center folders. The test results will be initially written on to the already set up one time reference database **112** which subsequently populates as results into an XL sheet.

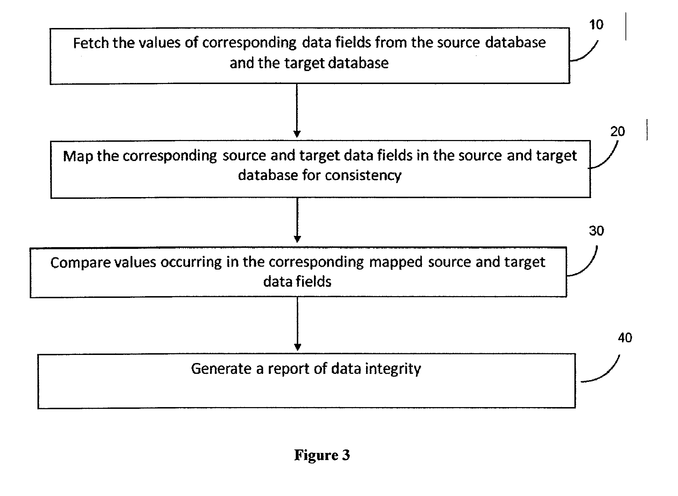

Figure 3 illustrates a flow diagram of method to automate testing of data integrity of an archived data; the archived data is transmitted between a source database and a target database, via a data comparison engine according to various exemplary embodiments of the invention.

In the initial step **10** of the proposed method enables fetching the values of corresponding data fields from the source database and the target database. In the next step **20,** method enables mapping corresponding source and target data fields retrieved from the source and target database for consistency. In the next step **30,** the values occurring in the corresponding mapped source and target data fields are compared. In the next step **40,** report is generated of data integrity, the report comprising at least one data fields inconsistent at the mapping step **(20)** and at least one mapped field having deviating values at the comparison step **(30).**

In a preferred embodiment of the invention, the source data base **102** represents data to be archived.

In a preferred embodiment of the invention, the target database **104** is configured to archive the source database **102** in XML format to be tested for data integrity.

In a preferred embodiment of the invention, the data comparison engine **108** is adapted to compare the corresponding mapped values of source and target data fields.

In a preferred embodiment of the invention, the report consists of spreadsheet displaying the generated post mapping of the respective data values.

It will be apparent to those skilled in the art that other modifications to and variations of the above-described techniques are possible without departing from the inventive concepts disclosed herein. Accordingly, the invention should be viewed as limited solely by the scope and spirit of the appended claims.

## Claims

1. A method to automate testing of data integrity of an archived data, the archived data is transmitted between a source database and a target database, via a data comparison engine, the said method comprising;
a) fetching the values of corresponding data fields from the source database and the target database;
b) mapping corresponding source and target data fields in the source and target database for consistency;
c) comparing values occurring in the corresponding mapped source and target data fields; and
d) generating a report of data integrity, the report comprising at least one data fields inconsistent at the mapping step (b) and at least one mapped field having deviating values at the comparison step (c).

2. The method as defined in claim 1, wherein the source database represents data to be archived.

3. The method as defined in claim 1, wherein the target database is configured to archive the source database in XML format to be tested for data integrity.

4. The method as defmed in claim 1, wherein the data comparison engine is adapted to compare the corresponding mapped values of source and target data fields.

5. A method as defined in claim 1, wherein the report consists of spreadsheet displaying the generated post mapping of the respective data values.

6. A system to automate testing of data integrity of an archived data, the archived data is transmitted between a source database and a target database, the system comprising:
an input module adapted to record a unique identifier;
a test execution engine to generate a XML file containing user input fetched therefrom the input module;
a data field mapper adapted to map corresponding source to target data field for consistency;
a data comparison engine adapted to identify potential values in each mapped data field and generate a comparison status report for each compared data values; and
a result generating module adapted to generate output of the scripting module in the form of a spreadsheet;

7. A system as defined in claim 6, wherein the archived data represents the data obtained from the user input module.

8. A system of claim 6, wherein the data comparison engine further comprising of at least one scripting module adapted to compare the corresponding source data values with target data values via at least one public function / test script.

9. A system as defined in claim 6, wherein the source database represents data to be archived.

10. A system as defined in claim 6, wherein the target database is configured to archive the source database in XML format to be tested for data integrity.

11. A system as defined in claim 6, wherein the spreadsheet displays the report generated post mapping of the respective data values.
